# EUROPEAN PATENT SPECIFICATION

(11) **EP 3 096 572 B1**
(45) Date of publication and mention of the grant of the patent: **15.05.2019**
(21) Application number: 16163274.0
(22) Date of filing: 31.03.2016
(51) Int. Cl.: H04W 64/00, G01S 5/02

(54) **METHOD AND DEVICE FOR POSITIONING**
VERFAHREN UND VORRICHTUNG ZUR POSITIONIERUNG
PROCÉDÉ ET DISPOSITIF DE POSITIONNEMENT

(30) Priority: 19.05.2015 CN 201510256395
(43) Date of publication of application: 23.11.2016
(73) Proprietor: Xiaomi Inc., Beijing 100085 (CN)
(72) Inventor: CHEN, Hong, 100085 BEIJING (CN); GAO, Ziguang, 100085 BEIJING (CN); HOU, Enxing, 100085 BEIJING (CN)
(74) Representative: Cabinet Beau de Loménie

(56) References cited:
- EP-A2- 2 632 215
- WO-A1-2015/009438
- WO-A2-2014/092996
- US-A1- 2014 106 773
- US-A1- 2014 342 754

## Description

### TECHNICAL FIELD

The present invention relates to the field of communication, and more particularly, to a method for positioning and a device thereof.

### BACKGROUND

With the popularity of wireless communication technology, more and more wireless smart devices, such as routers, smart phones, Wi-Fi sockets and so on are gradually used in houses. Typically, a house has a plurality of rooms with wireless smart devices in each room, such as a router in the living room, a Wi-Fi socket in the bedroom, and so on. The wireless smart devices in different room can send wireless messages to communicate with each other. In addition, a wireless smart device may periodically broadcast a wireless message. Therefore, each room may have a large number of wireless messages. Some wireless smart devices are fixedly arranged in the room, such as a router, and some wireless smart devices may be movable into and between each room at any time, such as smart phones.
Document EP 2 632 215 proposes a wireless communication device capable of determining its location in an indoor environment.
Document WO 2014/092996 discloses a method and a system for using a location fingerprint database to determine a location of a mobile device.
Document US 2014/0106773 describes a method for locating a mobile device inside a building by using a plurality of reference areas in the building as satellites.
Document US 2014/0342754 provides a method and a system for positioning wireless device.

### SUMMARY

This invention provides a method for positioning and a device thereof, achieving automatic space positioning. The invention is defined by the appended set of claims.

According to a first aspect of the embodiments of the present invention, there is provided a method for positioning, including:
collecting and analyzing wireless messages of wireless devices in a current space to obtain a first characteristic pattern of the current space;
performing a match with respect to the first characteristic pattern of the current space and preset characteristic patterns of a plurality of spaces, and
obtaining, if it is determined that there is a second characteristic pattern of the preset characteristic patterns matching the first characteristic pattern of the current space , space information corresponding to the second characteristic pattern, to determine a result for positioning the current space,
wherein the characteristic pattern may include a correspondence between an identifier and a signal quality of a wireless device.

In an embodiment, performing a match with respect to the first characteristic pattern of the current space and preset characteristic patterns of a plurality of spaces includes:
comparing, with respect to a characteristic pattern of each space of the plurality of spaces, the characteristic pattern of the space with the first characteristic pattern, and determining that the characteristic pattern of the space matches the first characteristic pattern if the characteristic pattern of the space comprises an identifier of each of the wireless devices in the current space and signal quality of the wireless devices in the first characteristic pattern is similar to that of wireless devices in the characteristic pattern of the space.

In an embodiment, the signal quality of the wireless devices in the first characteristic pattern is considered as similar to that of the wireless devices in the characteristic pattern of the space if:
the signal quality of N wireless devices in the first characteristic pattern falls within a signal quality range of corresponding wireless devices in the characteristic pattern of the space, and N reaches a designated number.

In an embodiment, the method may further include:
collecting and analyzing, with respect to each space of the plurality of spaces, wireless messages received from each wireless device to obtain a MAC (Media Access Control) address and a RSSI (Received Signal Strength Indication) of each wireless device so as to create the correspondence between each wireless device's MAC address and RSSI to obtain the characteristic pattern of the space.

In an embodiment, collecting wireless messages received from each wireless device is performed multiple times, and RRSIs obtained from the multiple collections for each wireless device are grouped as a RRSI range of the wireless device.

According to a second aspect of the embodiments of the present invention, there is provided a device for positioning, including:
a collecting module configured to collect and analyze wireless messages of wireless devices in a current space to obtain a first characteristic pattern of the current space;
a matching module configured to perform a match with respect to the first characteristic pattern of the current space and preset characteristic patterns of a plurality of spaces;
a positioning module configured to obtain, if a second characteristic pattern matching the first characteristic pattern of the current space is determined present, space information corresponding to the second characteristic pattern, to determine a result for positioning the current space,
wherein the characteristic pattern may include a correspondence between an identifier and a signal quality of a wireless device.

In an embodiment, the matching module includes:
a matching submodule configured to compare, with respect to a characteristic pattern of each space of the plurality of spaces, the characteristic pattern of the space with the first characteristic pattern, and to determine that the characteristic pattern of the space matches the first characteristic pattern, if the characteristic pattern of the space comprises an identifier of each of the wireless devices in the current space and signal quality of the wireless devices in the first characteristic pattern is similar to that of wireless devices in the characteristic pattern of the space.

In an embodiment, the signal quality of the wireless devices in the first characteristic pattern is considered as similar to that of the wireless devices in the characteristic pattern of the space if:

the signal quality of N wireless devices in the first characteristic pattern falls within a signal quality range of corresponding wireless devices in the characteristic pattern of the space, and N reaches a designated number.

In an embodiment, the device further includes:
a learning module configured to collect and analyze, with respect to each space of the plurality of spaces, wireless messages received from each wireless device to obtain a MAC address and a RSSI of each wireless device so as to create correspondence between each wireless device's MAC address and RSSI to obtain the characteristic pattern of the space.

In an embodiment the learning module is configured to collect the wireless messages received from each wireless device multiple times, and group RRSIs obtained from the multiple collections for each wireless device as a RRSI range of the wireless device.

According to a third aspect of the embodiments of the present invention, there is provided a device for positioning including:
a processor and a memory for storing instructions executable by the processor,
wherein the processor is configured to perform:
collecting and analyzing wireless messages of wireless devices in a current space to obtain a first characteristic pattern of the current space;
performing a match with respect to the first characteristic pattern of the current space and preset characteristic patterns of a plurality of spaces, and
obtaining, if a second characteristic pattern matching the first characteristic pattern of the current space is determined present, space information corresponding to the second characteristic pattern, to determine a result for positioning the current space,
wherein the characteristic pattern includes correspondence between an identifier and a signal quality of a wireless device.

According to a fourth aspect of the embodiment of the present invention, there is provided a computer program including instructions which, when being executed on a processor of an apparatus or a device, performs any one of the above methods.

This program can use any programming language, and be in the form of source code, object code, or code intermediate between source code and object code, such as in a partially compiled form, or in any other desirable form.

The invention also provides a computer readable data medium including instructions of a computer program as mentioned above.

The data medium may be any entity or device capable of storing the program. For example, the medium may comprise storage means, such as read only memory (ROM), e.g. a compact disk (CD) ROM or a microelectronic circuit ROM, or indeed magnetic recording means, e.g. a floppy disk or a hard disk.

Furthermore, the data medium may be a transmissible medium such as an electrical or optical signal, suitable for being conveyed via an electrical or optical cable, by radio, or by other means. The program of the invention may in particular be downloaded from an Internet type network.

Alternatively, the data medium may be an integrated circuit in which the program is incorporated, the circuit being adapted to execute or to be used in the execution of the method in question.

The embodiments of the present invention generate the following beneficial effects: by collecting and analyzing wireless messages of wireless devices within a current space, a first characteristic pattern of the current space is obtained. Further, by performing a match with respect to the first characteristic pattern of the current space and preset characteristic patterns of a plurality of spaces, and by determining there is a second characteristic pattern matching the first characteristic pattern of the current space, space information corresponding to the second characteristic pattern is obtained. Thus a positioning result for the current space is obtained, achieving automatic space positioning. This is an effective solution for automatically identifying a space currently entered.

It will be appreciated that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a positioning method according to an exemplary embodiment.
Fig. 2 is a flow chart of another positioning method according to exemplary embodiment.
Fig. 3 is a flow chart of a further positioning method according to exemplary embodiment.
Fig. 4 is a block diagram of another positioning device according to an exemplary embodiment.
Fig. 5 is a block diagram of another positioning device according to an exemplary embodiment.
Fig. 6 is a block diagram of another positioning device according to an exemplary embodiment.
Fig. 7 is a block diagram of another positioning device according to an exemplary embodiment.
Fig. 8 is a block diagram of another positioning device according to an exemplary embodiment.
Fig. 9 is a block diagram of another positioning device according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

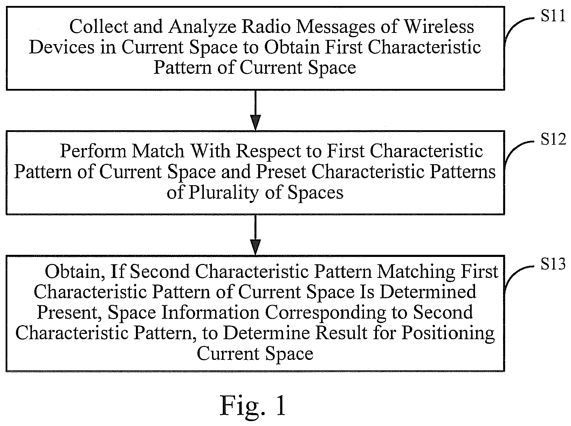

Fig. 1 is a flow chart of a positioning method according to an exemplary embodiment. In the embodiment considered in Fig. 1, the method is used in a terminal, and includes the following steps.

In step S11, wireless messages of wireless devices in a current space are collected and analyzed to obtain a first characteristic pattern of the current space.

In this embodiment, optionally, the current space means a space in which the terminal currently resides and can be any place covered by a wireless LAN. The wireless LAN may be one dedicated for home use, usually covering a plurality of spaces, such as spaces of bedrooms, a living room, a study, a dining room and so on. Optionally, there is also a plurality of wireless devices, fixedly or movably freely, in the respective spaces covered by the wireless LAN. The wireless devices include, but are not limited to: routers, smart phones, notebook computers, tablet PCs and so on.

In step S12, a match is performed with respect to the first characteristic pattern of the current space and preset characteristic patterns of the plurality of spaces.

Optionally, the characteristic patterns of the plurality of spaces, such as all the spaces covered by the wireless LAN, are generated in advance. In this embodiment, each generated characteristic pattern is unique, i.e. different from each other. Optionally, space information such as a space number, and the like is stored in the characteristic pattern to facilitate obtaining the space information after matching the characteristic patterns.

In this embodiment, the terminal may be any kind of terminal capable of receiving a wireless message and analyzing the wireless message, including, but not limited to: Sniffer, smart phones, and so on. The way that terminal analyzes the wireless message may include but not limited to: extracting a MAC (Media Access Control, MAC for short) address from a wireless message sent from a wireless device, and obtaining a RSSI (Received Signal Strength Indication), etc. The wireless messages can be those sent from among wireless devices, or those periodically broadcasted by a wireless device according to requirements of communication protocol.

The RSSI reflects a signal strength of a wireless device. When the RSSI is high in numerical value, it means that the wireless device receives a strong signal, and when the RSSI is low in numerical value, it means that the wireless device receives a weak signal.

In step S13, if it is determined that there is a second characteristic pattern matching the first characteristic pattern of the current space, space information corresponding to the second characteristic pattern is obtained, and a result for positioning the current space is determined.

The spatial information may include identification information of a space, such as a space number, for facilitating the user to know which space covered by the wireless LAN is currently entered by the terminal, so as to realize space positioning.

In this embodiment, when the space is positioned successfully, optionally, an action can also be triggered correspondingly based on the recognized space, such as automatically opening the speaker if it is determined that the living room is entered, or automatically opening a ZigBee bulb if it is determined that the study is entered, and is not explained too much here. The corresponding action can be triggered by a terminal, which is capable of triggering a corresponding action besides receiving, analyzing a wireless message. Or actions can be triggered by other smart devices which receive notices from a terminal. The terminal is capable of receiving, analyzing a wireless message, and prompting the other smart devices which space is currently entered, so as to enable the other smart devices to trigger corresponding actions, not specifically restricted in the present embodiment, based on the terminal's prompt.

In this embodiment, optionally, any characteristic pattern may include a correspondence between an identifier and a signal quality of a wireless device. Optionally, the identifier of the wireless device may be a MAC address, and the signal quality of the wireless device may be a RSSI. The wireless device considered within the characteristic pattern means one which is located within a space which is the same as or different from that of a terminal and sends signals receivable to the terminal. For example, a characteristic pattern in a space includes a correspondence between the identifiers and signal quality of three wireless devices, two of which within the same space as said space, the other being within an adjacent space.

In this embodiment, optionally, performing a match with respect to the first characteristic pattern of the current space and the preset characteristic patterns of the plurality of spaces includes the following steps:
with respect to a characteristic pattern of each space of the plurality of spaces, the characteristic pattern of the space is compared with the first characteristic pattern, and if the characteristic pattern of the space comprises an identifier of each wireless device in the current space and signal quality of the wireless devices in the first characteristic pattern is similar to that of the wireless devices in the characteristic pattern of the space are similar, it is determined that the characteristic pattern of the space matches the first characteristic pattern.

In this embodiment, optionally, the signal quality of the wireless devices in the first characteristic pattern is similar to that of the wireless devices in the characteristic pattern of the space in the following aspect.

The signal quality of N wireless devices in the first characteristic pattern falls within a signal quality range of the corresponding wireless devices in the characteristic pattern of the space, and N reaches a designated number.

In this embodiment, optionally, the above method further comprises the following steps.

With respect to each space of the plurality of spaces, wireless messages received from each wireless device are collected, and then analyzed to obtain a MAC address and a RSSI of each wireless device, and a correspondence between each wireless device's MAC address and RSSI is established to obtain the characteristic pattern of the space.

In this embodiment, optionally, wireless messages received from each wireless device are collected multiple times, and RRSIs obtained from the multiple collections for each wireless device are grouped as a RRSI range of the wireless devices. In the method provided in the present embodiment, by collecting and analyzing wireless messages of wireless devices within a current space, a first characteristic pattern of the current space is obtained. Further, by performing a match with respect to the first characteristic pattern of the current space and preset characteristic patterns of a plurality of spaces, and by determining there is a second characteristic pattern matching the first characteristic pattern of the current space, space information corresponding to the second characteristic pattern is obtained. Thus a positioning result for the current space is obtained, achieving automatic space positioning. This is an effective solution for automatically identifying a space currently entered.

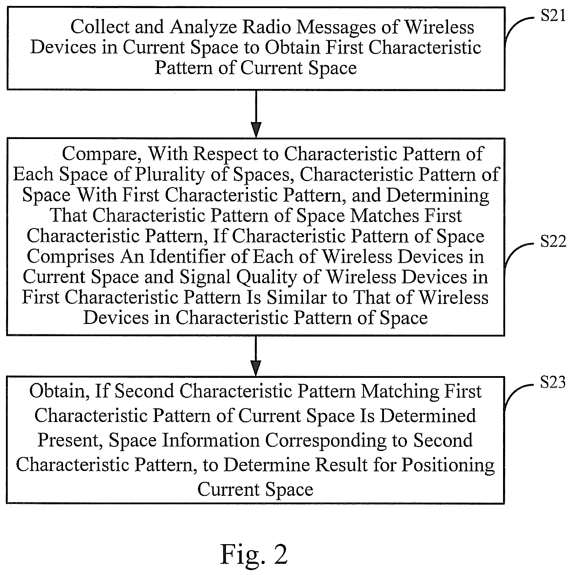

Fig. 2 is a flow chart of a positioning method according to another exemplary embodiment. In this embodiment, the method is used in a terminal, and includes the following steps.

In step S21, wireless messages of wireless devices in a current space are collected and analyzed to obtain a first characteristic pattern of the current space.

The current space means a space where the terminal currently resides and is covered by a wireless LAN. The wireless LAN may cover a plurality of spaces. Each of the plurality of spaces has a characteristic pattern including a correspondence between an identifier and a signal quality of a wireless device. Each of the plurality of spaces may be provided with one or more wireless devices, not limited here. For example, in a user's house, the living room is provided with a router, a TV, a Wi-Fi camera, the bedrooms with Wi-Fi air conditioners, Bluetooth voice boxes, ZigBee bulbs, etc. When the living room is adjacent to the bedrooms, signals sent from wireless devices in the bedrooms can be received even in the living room. Therefore, the characteristic pattern of the living room includes not only a correspondence between an identifier and a signal quality of the router, a correspondence between an identifier and a signal quality of the TV, a correspondence between an identifier and a signal quality of the Wi-Fi camera, but also a correspondence between an identifier and a signal quality of the bluetooth boxes, a correspondence between an identifier and a signal quality of the Zigbee bulbs, with signal quality of these wireless devices in the bedrooms weaker than that in the living room in the characteristic pattern.

Optionally, the first characteristic pattern of the current space may include a correspondence between an identifier and a signal quality of wireless devices.

In step 22, with respect to a characteristic pattern of each space of the plurality of spaces, the characteristic pattern of the space is compared with the first characteristic pattern, and if the characteristic pattern of the space comprises an identifier of each wireless device in the current space and a signal quality of the wireless devices in the first characteristic pattern is similar to that of the wireless devices in the characteristic pattern of the space, it is determined that the characteristic pattern of the space matches the first characteristic pattern.

The number of wireless devices of the characteristic pattern in the space may be equal or greater than that in the first characteristic pattern. For example, the characteristic pattern in the space may include 5 wireless devices corresponding respectively to 1-5, and the first characteristic pattern in the current space may include 4 wireless devices corresponding respectively to 1-4. The signal of the wireless device 5 may be too weak to be received by the terminal.

In this embodiment, optionally, the signal quality of the wireless devices in the first characteristic pattern is similar to that of the wireless devices in the characteristic pattern of the space in the following aspect.

The signal quality of N wireless devices in the first characteristic pattern falls within a signal quality range of the corresponding wireless devices in the characteristic pattern of the space, and N reaches a designated number.

The designated number may be preset according to needs in advance, such as 2, 3 or 5, etc., not limited here.

In this embodiment, optionally, each of the characteristic patterns of the plurality of spaces includes a range of signal quality and corresponds to an identifier of a wireless device. The smallest number for N is 1, and the largest number is the total number of all the wireless devices in the first characteristic pattern of the current space. If the signal quality of all the wireless devices in the first characteristic pattern of the current space falls within a signal quality range of the corresponding wireless devices in the characteristic pattern of the space, the position result is very precise.

For example, the characteristic pattern of the space includes identifiers and their corresponding ranges of signal quality for 3 wireless devices, and the characteristic pattern of the current space includes identifiers and their corresponding ranges of signal quality for 3 wireless devices. The identifiers in the characteristic pattern of the current space are the same as the identifiers in the characteristic pattern of the space. In case of the designated number being 3, if the signal quality of 3 wireless devices in the first characteristic pattern of the current space falls within a signal quality range of the corresponding wireless devices in the characteristic pattern of the space, it is determined that the characteristic pattern of the space matches the first characteristic pattern of the current space. In case of the designated number being 2, if the signal quality of 2 wireless devices in the first characteristic pattern of the current space falls within a signal quality range of the corresponding wireless devices in the characteristic pattern of the space, it is determined that the characteristic pattern of the space matches the first characteristic pattern of the current space.

In step S23, if it is determined that there is a second characteristic pattern matching the first characteristic pattern of the current space, space information corresponding to the second characteristic pattern is obtained, and a result for positioning the current space is determined.

In this embodiment, optionally, this method may include the following steps.

With respect to each space of the plurality of spaces, wireless messages received from each wireless device are collected, the wireless messages then are analyzed to obtain a MAC address and a RSSI of each wireless device, and a correspondence between each wireless device's MAC address and RSSI is established to obtain the characteristic pattern of the space.

Optionally, wireless messages received from each wireless device are collected multiple times, and RRSIs obtained from the multiple collections for each wireless device are grouped as a RRSI range of the wireless device.

In the method provided in the present embodiment, by collecting and analyzing wireless messages of wireless devices within a current space, a first characteristic pattern of the current space is obtained. Further, with respect to a characteristic pattern of each space of the plurality of spaces, a comparison is performed between the first characteristic pattern and the characteristic pattern of the space, and if the characteristic pattern of the space includes an identifier of every wireless device in the current space, and signal quality of wireless devices of the first characteristic pattern is similar to that of the space, it is determined the characteristic pattern of the space matches the first characteristic pattern. In the case that there is a second characteristic pattern matching the first characteristic pattern of the current space, space information corresponding to the second characteristic pattern is obtained. Thus a positioning result for the current space is obtained, achieving automatic space positioning. This is an effective solution for automatically identifying a space currently entered.

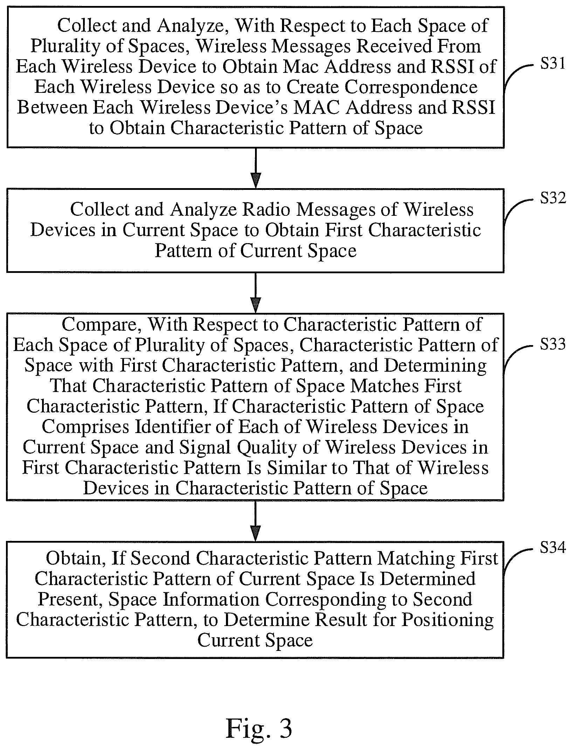

Fig. 3 is a flow chart of positioning method according to an exemplary embodiment. In this embodiment, the method is used in a terminal, and includes the following steps.

In step S31, with respect to each space of the plurality of spaces, wireless messages received from each wireless device are collected, the wireless messages then are analyzed to obtain a MAC address and a RSSI of each wireless device, and a correspondence between each wireless device's MAC address and RSSI is established to obtain the characteristic pattern of the space.

The plurality of spaces may be ones covered by wireless LAN.

Optionally, wireless messages received from each wireless device are collected multiple times, and RRSIs obtained from the multiple collections for each wireless device are grouped as a RRSI range of the wireless device.

For example, RSSIs obtained by 2 times of collections for a wireless device is -60dbm and -70dbm respectively, so a range of signal quality is [-70dbm, -60dbm].

In an embodiment, in case that there are a plurality of collected signal qualities, the largest one and the smallest one may be selected to make up a range of signal quality. But the invention is not limited here to this embodiment.

In step S32, wireless messages of wireless devices in a current space are collected and analyzed to obtain a first characteristic pattern of the current space.

The first characteristic pattern may include a correspondence between a wireless device's MAC address and RSSI. Optionally, the first characteristic pattern may include one or more wireless devices located in current space or other spaces.

In step S33, with respect to a characteristic pattern of each space of the plurality of spaces, a comparison is performed between the characteristic pattern of the space and the first characteristic pattern, and if the characteristic pattern of the space includes an identifier of every wireless device in the current space, and signal quality of wireless devices of the first characteristic pattern is similar to that of the space, it is determined that the characteristic pattern of the space matches the first characteristic pattern.

Optionally, the signal quality of the wireless devices in the first characteristic pattern is similar to that of the wireless devices in the characteristic pattern of the space in the following aspect.

The signal quality of N wireless devices in the first characteristic pattern falls within a signal quality range of the corresponding wireless devices in the characteristic pattern of the space, and N reaches a designated number. The designated number may be preset according to needs in advance, and is not limited here.

In step S34, if it is determined that there is a second characteristic pattern matching the first characteristic pattern of the current space, space information corresponding to the second characteristic pattern is obtained, and a result for positioning the current space is determined.

In the method provided in the present embodiment, with respect to each space of the plurality of spaces, wireless messages received from each wireless device are collected, the wireless messages then are analyzed to create a characteristic pattern of the space. Further, by collecting and analyzing wireless messages of wireless devices within a current space, a first characteristic pattern of the current space is obtained. With respect to a characteristic pattern of each space of the plurality of spaces, a comparison is performed between the first characteristic pattern and the characteristic pattern of the space, and if there is a second characteristic pattern matching the first characteristic pattern, space information corresponding to the second characteristic pattern is obtained. Thus a positioning result for the current space is obtained, achieving automatic space positioning. This is an effective solution for automatically identifying a space currently entered.

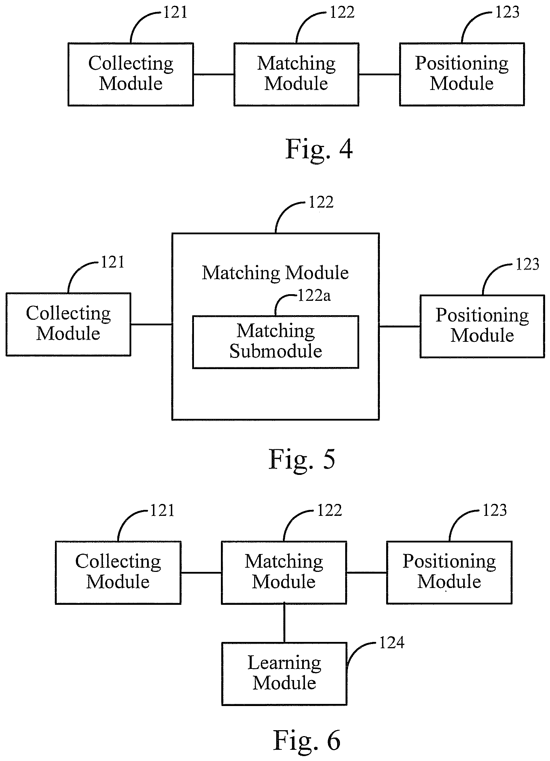

Fig. 4 is a block diagram of a positioning device according to an exemplary embodiment. Referring to Fig.4, the device may include a collecting module 121, a matching module 122, and a positioning module 123.

The collecting module 121 is configured to collect and analyze wireless messages of wireless devices in a current space to obtain a first characteristic pattern of the current space.

The matching module 122 is configured to perform a match with respect to the first characteristic pattern of the current space and preset characteristic patterns of a plurality of spaces.

The positioning module 123 is configured to obtain, if a second characteristic pattern matching the first characteristic pattern of the current space is determined present, space information corresponding to the second characteristic pattern, to determine a result for positioning the current space.

In this embodiment, optionally, any characteristic pattern may include a correspondence between an identifier and a signal quality of a wireless device.

Referring to Fig.5, in this embodiment, optionally, the matching module 122 includes the following submodules.

A matching submodule 122a is configured to compare, with respect to a characteristic pattern of each space of the plurality of spaces, the characteristic pattern of the space with the first characteristic pattern, and determine that the characteristic pattern of the space matches the first characteristic pattern, if the characteristic pattern of the space comprises an identifier of each of the wireless devices in the current space and signal quality of the wireless devices in the first characteristic pattern is similar to that of wireless devices in the characteristic pattern of the space.

Optionally, the signal quality of the wireless devices in the first characteristic pattern is similar to that of the wireless devices in the characteristic pattern of the space in the following aspect.

The signal quality of N wireless devices in the first characteristic pattern falls within a signal quality range of the corresponding wireless devices in the characteristic pattern of the space, and N reaches a designated number.

Referring to Fig.6, in this embodiment, optionally, the device may further include the following modules.

A learning module 124 is configured to collect and analyze, with respect to each space of the plurality of spaces, wireless messages received from each wireless device to obtain a MAC address and a RSSI of each wireless device so as to create correspondence between each wireless device's MAC address and RSSI to obtain the characteristic pattern of the space.

In this embodiment, optionally, the learning module 124 is configured to collect the wireless messages received from each wireless device multiple times, and group RRSIs obtained from the multiple collections for each wireless device as a RRSI range of the wireless device.

With regard to the devices in the above embodiments, the particular implementations that the above modules and submodules perform have been detailed in the related method embodiments, not describe with details here.

With the devices provided in the present embodiment, by collecting and analyzing wireless messages of wireless devices within a current space, a first characteristic pattern of the current space is obtained. Further, a comparison is performed between the first characteristic pattern and preset characteristic patterns of the plurality of spaces. In the case that there is a second characteristic pattern matching the first characteristic pattern of the current space, space information corresponding to the second characteristic pattern is obtained. Thus a positioning result for the current space is obtained, achieving automatic space positioning. This is an effective solution for automatically identifying a space currently entered.

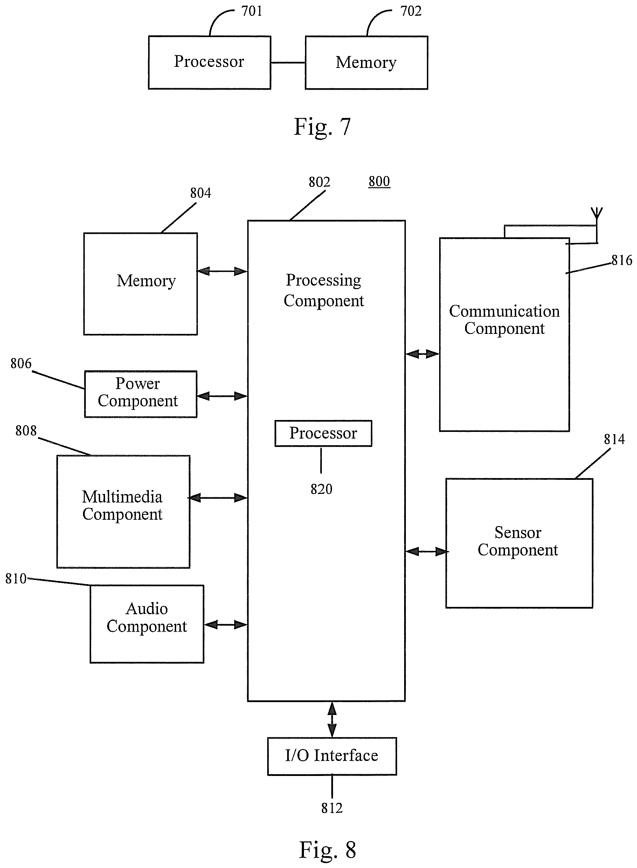

Fig. 7 is a block diagram of another positioning device according to an exemplary embodiment. Referring to Fig.7, the device may include a processor 701 and a memory 702 for storing instructions executable by the processor.

The processor 701 may be configured to perform:
collecting and analyzing wireless messages of wireless devices in a current space to obtain a first characteristic pattern of the current space;
performing a match with respect to the first characteristic pattern of the current space and preset characteristic patterns of a plurality of spaces, and
obtaining, if a second characteristic pattern matching the first characteristic pattern of the current space is determined present, space information corresponding to the second characteristic pattern, to determine a result for positioning the current space.

The characteristic pattern may include a correspondence between an identifier and a signal quality of a wireless device.

Optionally, the processor 701 is configured to perform a match with respect to the first characteristic pattern of the current space and preset characteristic patterns of a plurality of spaces in the following way.

The processor 701 is configured to compare, with respect to a characteristic pattern of each space of the plurality of spaces, the characteristic pattern of the space with the first characteristic pattern, and determine that the characteristic pattern of the space matches the first characteristic pattern, if the characteristic pattern of the space comprises an identifier of each wireless device in the current space and signal quality of the wireless devices in the first characteristic pattern is similar to that of wireless devices in the characteristic pattern of the space.

Optionally, the processor 701 is configured to determine whether the signal quality of the wireless devices in the first characteristic pattern is similar to that of the wireless devices in the characteristic pattern of the space in the following way.

The signal quality of N wireless devices in the first characteristic pattern falls within a signal quality range of the corresponding wireless devices in the characteristic pattern of the space, and N reaches a designated number.

Optionally, the processor 701 is configured to collect and analyze, with respect to each space of the plurality of spaces, wireless messages received from each wireless device to obtain a MAC address and a RSSI of each wireless device so as to create a correspondence between each wireless device's MAC address and RSSI to obtain the characteristic pattern of the space.

Optionally, the processor 701 is configured to collect wireless messages received from each wireless device multiple times, and group RRSIs obtained from the multiple collections for each wireless device as a RRSI range of the wireless device.

Fig. 8 is a block diagram of a device 800 for positioning according to an exemplary embodiment. For example, the device 800 may be a mobile telephone, a computer, a digital broadcasting terminal, a message transceiver device, a games console, a tablet device, a medical device, a fitness facility, a PDA (personal digital assistant) and the like.

Referring to Fig.8, the device 800 may include one or more of the following components: a processor component 802, a memory 804, a power supply component 806, a multimedia component 808, an audio component 810, an input/output (I/O) interface 812, a sensor component 814 and a communication component 816.

The processor component 802 typically controls overall operations of the device 800, such as the operations associated with display, telephone calls, data communications, camera operations, and recording operations. The processor component 802 may include one or more processors 820 to execute instructions to perform all or part of steps in the above described methods. Moreover, the processor component 802 may include one or more modules which facilitate the interaction between the processor component 802 and other components. For instance, the processor component 802 may include a multimedia module to facilitate the interaction between the multimedia component 808 and the processor component 802.

The memory 804 is configured to store various types of data to support the operation of the device 800. Examples of such data include instructions for any applications or methods operated on the device 800, contact data, phonebook data, messages, pictures and videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk..

The power supply component 806 provides power to various components of the device 800. The power supply component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes a touch panel, the screen may be implemented as a touch screen to receive input signal from users. The touch panel includes one or more touch sensors to sense touches, swipes, and gestures on the touch panel. The touch sensors may not only sense a boundary of a touch or swipe action, but also sense a period of time and a pressure associated with the touch or swipe action.. In some embodiments, the multimedia component 808 includes front camera and/or a rear camera. The front camera and the rear camera may receive an external multimedia datum while the device 800 is in an operation mode, such as a photographing mode or a video mode. Each of the front camera and the rear camera may be a fixed optical lens system or may have focus and optical zoom capability.

The audio component 810 is configured to output and/or input audio signals. For example, the audio component 810 includes a microphone (MIC) configured to receive external audio signals when the device 800 is in an operation mode such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processor component 802 and peripheral interface modules, such as a keyboard, a click wheel and buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect open/closed statuses of the device 800, and relative positioning of components, such as the display and the keypad. The sensor component 814 may also detect position changes of the device 800 or its components, presence or absence of user contact with the device 800, orientation or acceleration/deceleration of the device 800, and temperature changes of the device 800. The sensor component 814 may further include a proximity sensor configured to detect the presence of nearby objects without any physical contact. Moreover, the sensor component 814 may include a light sensor, for example, a CMOS or CCD image sensor, for use in imaging applications. In some embodiments, the sensor component 814 may also include an acceleration sensor, a gyro sensor, a magnetic sensor, a pressure sensor, or a temperature sensor.

The communication component 816 is configured to facilitate wired communication or wireless communication between the device 800 and other equipment. The device 800 can access a wireless network based on communication standards, such as WiFi, 2G, 3G, or a combination thereof. In one exemplary embodiment, the communication component 816 receives a broadcast signal or broadcast related information from an external broadcast management system via a broadcast channel. In another exemplary embodiment, the communication component 816 further includes a near-field communication (NFC) module to facilitate short-range communications. The NFC module, for example, may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium storing instructions, such as stored in the memory 704, executable by the processor 720 in the device 700, for performing the above-described methods. For example, the non-transitory computer-readable storage medium may be a ROM, a random access memory (RAM), a CD-ROM, a magnetic tape, a floppy disc, an optical data storage device, and the like.

A non-transitory computer-readable storage medium is provided. Instructions in the storage medium are executable by a processor of a mobile terminal so that the mobile terminal may perform the above method provided in any of the above embodiments.

With the non-transitory computer-readable storage medium provided in this embodiment, by collecting and analyzing wireless messages of wireless devices within a current space, a first characteristic pattern of the current space is obtained. Further, by performing a match with respect to the first characteristic pattern of the current space and preset characteristic patterns of a plurality of spaces, and by determining there is a second characteristic pattern matching the first characteristic pattern of the current space, space information corresponding to the second characteristic pattern is obtained. Thus a positioning result for the current space is obtained, achieving automatic space positioning. This is an effective solution for automatically identifying a space currently entered.

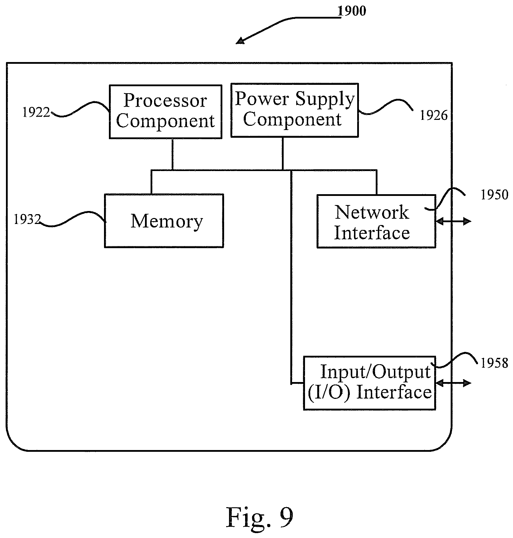

Fig.9 is a block diagram of a device 1900 for positioning according to an exemplary embodiment. For example, the device 1900 may be provided as a server. Referring to Fig. 9, the device 1900 includes a processor component 1922 that further includes one or more processors, and memory resources represented by a memory 1932 for storing instructions executable by the processing component 1922. The application programs stored in the memory 1932 may include one or more modules each corresponding to a set of instructions. Further, the processor component 1922 is configured to execute instructions to perform the above described method provided in any of the above embodiments.

The device 1900 may also include a power supply component 1926 configured to perform power management of the device 1900, wired or wireless network interface(s) 1950 configured to connect the device 1900 to a network, and an input/output (I/O) interface 1958. The device 1900 may operate based on an operating system stored in the memory 832, such as Windows Server™, Mac OS X™, Unix™, Linux™, FreeBSD™, and the like.

With the above device disclosed in this embodiment, by collecting and analyzing wireless messages of wireless devices within a current space, a first characteristic pattern of the current space is obtained. Further, by performing a match with respect to the first characteristic pattern of the current space and preset characteristic patterns of a plurality of spaces, and by determining there is a second characteristic pattern matching the first characteristic pattern of the current space, space information corresponding to the second characteristic pattern is obtained. Thus a positioning result for the current space is obtained, achieving automatic space positioning. This is an effective solution for automatically identifying a space currently entered.

## Claims

1. A method for positioning, performed by a terminal, the method comprising:
collecting and analyzing (S11, S21) wireless messages of wireless devices in a current space to obtain a first characteristic pattern of the current space;
performing (S12) a match with respect to the first characteristic pattern of the current space and preset characteristic patterns of a plurality of spaces, and
obtaining (S13, S23), if a second characteristic pattern of the preset characteristic patterns matching the first characteristic pattern of the current space is determined present, space information corresponding to the second characteristic pattern, to determine a result for positioning the current space,
wherein the characteristic pattern comprises a correspondence between an identifier and a signal quality of a wireless device,
the method further comprising:
collecting and analyzing (S31), with respect to each space of the plurality of spaces, wireless messages received from each wireless device to obtain a MAC address and a RSSI of each wireless device so as to create the correspondence between each wireless device's MAC address and RSSI to obtain the characteristic pattern of the space, wherein collecting wireless messages received from each wireless device is performed multiple times, and RSSIs obtained from the multiple collections for each wireless device are grouped as a RSSI range of each wireless device, the method being **characterised by**, the largest RSSI and the smallest RSSI obtained for each wireless device from the multiple collections being selected to make up the RSSI range of each wireless device.

2. The method of claim 1, wherein performing (S12) a match with respect to the first characteristic pattern of the current space and preset characteristic patterns of a plurality of spaces comprises:
comparing (S21), with respect to a characteristic pattern of each space of the plurality of spaces, the characteristic pattern of each the space with the first characteristic pattern, and
determining (S21) that the characteristic pattern of a space matches the first characteristic pattern, if the characteristic pattern of a space comprises an identifier of each of the wireless devices in the current space and signal quality of the wireless devices in the first characteristic pattern is similar to that of wireless devices in the characteristic pattern of a space.

3. The method of claim 2, wherein the signal quality of the wireless devices in the first characteristic pattern is considered as similar to that of the wireless devices in the characteristic pattern of a space if: the signal quality of N wireless devices in the first characteristic pattern falling within a signal quality range of corresponding wireless devices in the characteristic pattern of a space, and N reaching a designated number.

4. A terminal for positioning, comprising:
a collecting module (121) configured to collect and analyze wireless messages of wireless devices in a current space to obtain a first characteristic pattern of the current space;
a matching module (122) configured to perform a match with respect to the first characteristic pattern of the current space and preset characteristic patterns of a plurality of spaces; and
a positioning module (123) configured to obtain, if a second characteristic pattern matching the first characteristic pattern of the current space is determined present, space information corresponding to the second characteristic pattern, to determine a result for positioning the current space,
wherein the characteristic pattern may include correspondence between an identifier and a signal quality of a wireless device,
wherein the device further comprises:
a learning module (124) configured to collect and analyze, with respect to each space of the plurality of spaces, wireless messages received from each wireless device to obtain a MAC address and a RSSI of each wireless device so as to create a correspondence between each wireless device's MAC address and RSSI to obtain the characteristic pattern of the space, wherein the learning module (124) is configured to collect the wireless messages received from each wireless device multiple times, and group RSSIs obtained from the multiple collections for each wireless device as a RSSI range of each wireless device, the terminal being **characterised by**, the largest RSSI and the smallest RSSI obtained for each wireless device from the multiple collections being selected to make up the RSSI range of each wireless device.

5. The terminal of claim 4, wherein the matching module comprises:
a matching submodule (122a) configured to compare, with respect to a characteristic pattern of each space of the plurality of spaces, the characteristic pattern of each space with the first characteristic pattern, and determine that the characteristic pattern of a space matches the first characteristic pattern, if the characteristic pattern of a space comprises an identifier of each of the wireless devices in the current space and signal quality of the wireless devices in the first characteristic pattern is similar to that of wireless devices in the characteristic pattern of a space.

6. The terminal of claim 5, wherein the signal quality of the wireless devices in the first characteristic pattern is considered as similar to that of the wireless devices in the characteristic pattern of a space if: the signal quality of N wireless devices in the first characteristic pattern falls within a signal quality range of corresponding wireless devices in the characteristic pattern of a space, and N reaches a designated number.

7. A computer program including instructions which, when being executed on a processor of an apparatus, performs a method according to any of claims 1 to 3.

## Patentansprüche

1. Verfahren zur Positionierung, die durch ein Endgerät durchgeführt wird, das Verfahren umfassend:
Sammeln und Analysieren (S11, S21) von drahtlosen Nachrichten von drahtlosen Vorrichtungen in einem aktuellen Raum, um ein erstes charakteristisches Muster des aktuellen Raums zu erhalten,
Durchführen (S12) einer Anpassung bezüglich des ersten charakteristischen Musters des aktuellen Raums und vorab festgelegter charakteristischer Muster von mehreren Räumen, und
Erhalten (S13, S23), wenn ein zweites charakteristisches Muster der vorab festgelegten charakteristischen Muster, das mit dem ersten charakteristischen Muster des aktuellen Raums übereinstimmt, als vorhanden bestimmt wird, von Rauminformationen, die dem zweiten charakteristischen Muster entsprechen, um ein Ergebnis zur Positionierung des aktuellen Raums zu bestimmen,
wobei das charakteristische Muster eine Übereinstimmung zwischen einer Kennung und einer Signalqualität einer drahtlosen Vorrichtung umfasst,
das Verfahren ferner umfassend:
Sammeln und Analysieren (S31) bezüglich jedes Raums der mehreren Räume von drahtlosen Nachrichten, die von jeder drahtlosen Vorrichtung erhalten werden, um eine MAC-Adresse und eine RSSI von jeder drahtlosen Vorrichtung zu erhalten, um die Übereinstimmung zwischen der MAC-Adresse und der RSSI von jeder drahtlosen Vorrichtung zu erzeugen, um das charakteristische Muster des Raums zu erhalten, wobei das Sammeln der drahtlosen Nachrichten, die von jeder drahtlosen Vorrichtung erhalten werden, mehrere Male durchgeführt wird, und die RSSIs, die anhand der mehreren Sammlungen für jede drahtlose Vorrichtung erhalten werden, als ein RSSI-Bereich von jeder drahtlosen Vorrichtung gruppiert werden, wobei das Verfahren **dadurch gekennzeichnet ist, dass** die größte RSSI und die kleinste RSSI, die für jede drahtlose Vorrichtung anhand der mehreren Sammlungen erhalten werden, ausgewählt werden, um den RSSI-Bereich von jeder drahtlosen Vorrichtung zu bilden.

2. Verfahren nach Anspruch 1, wobei das Durchführen (S12) einer Anpassung bezüglich des ersten charakteristischen Musters des aktuellen Raums und vorab festgelegter charakteristischer Muster von mehreren Räumen umfasst:
Vergleichen (S21), bezüglich eines charakteristischen Musters von jedem Raum der mehreren Räume, des charakteristischen Musters von jedem Raum mit dem ersten charakteristischen Muster, und
Bestimmen (S21), dass das charakteristische Muster eines Raums mit dem ersten charakteristischen Muster übereinstimmt, wenn das charakteristische Muster eines Raums eine Kennung von jeder der drahtlosen Vorrichtungen in dem aktuellen Raum umfasst und die Signalqualität der drahtlosen Vorrichtungen in dem ersten charakteristischen Muster ähnlich wie jene der drahtlosen Vorrichtungen in dem charakteristischen Muster eines Raums ist.

3. Verfahren nach Anspruch 2, wobei die Signalqualität der drahtlosen Vorrichtungen in dem ersten charakteristischen Muster als ähnlich zu jener der drahtlosen Vorrichtungen in dem charakteristischen Muster eines Raums angesehen wird, wenn:
die Signalqualität von N drahtlosen Vorrichtungen in dem ersten charakteristischen Muster in einen Signalqualitätsbereich von entsprechenden drahtlosen Vorrichtungen in dem charakteristischen Muster eines Raums fällt
und N eine bestimmte Anzahl erreicht.

4. Endgerät zur Positionierung, umfassend:
ein Sammelmodul (121), das konfiguriert ist, um drahtlose Nachrichten von drahtlosen Vorrichtungen in einem aktuellen Raum zu sammeln und analysieren, um ein erstes charakteristisches Muster des aktuellen Raums zu erhalten,
ein Anpassungsmodul (122), das konfiguriert ist, um eine Anpassung bezüglich des ersten charakteristischen Musters des aktuellen Raums und vorab festgelegter charakteristischer Muster von mehreren Räumen durchzuführen, und
ein Positionierungsmodul (123), das konfiguriert ist, um, wenn ein zweites charakteristisches Muster, das mit dem ersten charakteristischen Muster des aktuellen Raums übereinstimmt, als vorhanden bestimmt wird, Rauminformationen, die dem zweiten charakteristischen Muster entsprechen, zu erhalten, um ein Ergebnis zur Positionierung des aktuellen Raums zu bestimmen,
wobei das charakteristische Muster eine Übereinstimmung zwischen einer Kennung und einer Signalqualität einer drahtlosen Vorrichtung beinhalten kann,
wobei die Vorrichtung ferner umfasst:
ein Lernmodul (124), das konfiguriert ist, um bezüglich jedes Raums der mehreren Räume drahtlose Nachrichten zu sammeln und analysieren, die von jeder drahtlosen Vorrichtung erhalten werden, um eine MAC-Adresse und eine RSSI von jeder drahtlosen Vorrichtung zu erhalten, um eine Übereinstimmung zwischen der MAC-Adresse und der RSSI von jeder drahtlosen Vorrichtung zu erzeugen, um das charakteristische Muster des Raums zu erhalten, wobei das Lernmodul (124) konfiguriert ist, um die drahtlosen Nachrichten, die von jeder drahtlosen Vorrichtung erhalten werden, mehrere Male zu sammeln, und die RSSIs, die anhand der mehreren Sammlungen für jede drahtlose Vorrichtung erhalten werden, als einen RSSI-Bereich von jeder drahtlosen Vorrichtung zu gruppieren, wobei das Endgerät **dadurch gekennzeichnet ist, dass** die größte RSSI und die kleinste RSSI, die für jede drahtlose Vorrichtung anhand der mehreren Sammlungen erhalten werden, ausgewählt werden, um den RSSI-Bereich von jeder drahtlosen Vorrichtung zu bilden.

5. Endgerät nach Anspruch 4, wobei das Anpassungsmodul umfasst:
ein Anpassungsteilmodul (122a), das konfiguriert ist, um bezüglich eines charakteristischen Musters von jedem Raum der mehreren Räume das charakteristische Muster von jedem Raum mit dem ersten charakteristischen Muster zu vergleichen und zu bestimmen, dass das charakteristische Muster eines Raums mit dem ersten charakteristischen Muster übereinstimmt, wenn das charakteristische Muster eines Raums eine Kennung von jeder der drahtlosen Vorrichtungen in dem aktuellen Raum umfasst und die Signalqualität der drahtlosen Vorrichtungen in dem ersten charakteristischen Muster ähnlich zu jener der drahtlosen Vorrichtungen in dem charakteristischen Muster eines Raums ist.

6. Endgerät nach Anspruch 5, wobei die Signalqualität der drahtlosen Vorrichtungen in dem ersten charakteristischen Muster ähnlich zu jener der drahtlosen Vorrichtungen in dem charakteristischen Muster eines Raums betrachtet wird, wenn:
die Signalqualität von N drahtlosen Vorrichtungen in dem ersten charakteristischen Muster in einen Signalqualitätsbereich von entsprechenden drahtlosen Vorrichtungen in dem charakteristischen Muster eines Raums fällt und N
eine bestimmte Anzahl erreicht.

7. Computerprogramm, das Befehle aufweist, welche, wenn sie auf einem Prozessor einer Vorrichtung ausgeführt werden, ein Verfahren nach einem der Ansprüche 1 bis 3 durchführen.

## Revendications

1. Procédé de positionnement, mis en oeuvre par un terminal, le procédé comprenant les étapes ci-dessous consistant à :
collecter et analyser (S11, S21) des messages sans fil de dispositifs sans fil dans un espace en cours en vue d'obtenir un premier motif caractéristique de l'espace en cours ;
mettre en oeuvre (S12) une correspondance par rapport au premier motif caractéristique de l'espace en cours et à des motifs caractéristiques prédéfinis d'une pluralité d'espaces ; et
obtenir (S13, S23), si un second motif caractéristique des motifs caractéristiques prédéfinis correspondant au premier motif caractéristique de l'espace en cours est déterminé, des informations d'espace correspondant au second motif caractéristique, en vue de déterminer un résultat pour positionner l'espace en cours ;
dans lequel le motif caractéristique comprend une correspondance entre un identificateur et une qualité de signal d'un dispositif sans fil ;
le procédé comprenant en outre les étapes ci-dessous consistant à :
collecter et analyser (S31), en ce qui concerne chaque espace de la pluralité d'espaces, des messages sans fil reçus en provenance de chaque dispositif sans fil, en vue d'obtenir une adresse MAC et un indicateur d'intensité de signal reçu, RSSI, de chaque dispositif sans fil, de manière à créer la correspondance entre l'adresse MAC et l'indicateur RSSI de chaque dispositif sans fil en vue d'obtenir le motif caractéristique de l'espace, dans lequel l'étape de collecte de messages sans fil reçus en provenance de chaque dispositif sans fil est mise en oeuvre plusieurs fois, et des indicateurs RSSI, obtenus à partir des multiples étapes de collecte pour chaque dispositif sans fil, sont regroupés sous la forme d'une plage d'indicateurs RSSI de chaque dispositif sans fil, le procédé étant **caractérisé en ce que**, le plus grand indicateur RSSI et le plus petit indicateur RSSI obtenus pour chaque dispositif sans fil à partir des multiples étapes de collecte sont sélectionnés pour constituer la plage d'indicateurs RSSI de chaque dispositif sans fil.

2. Procédé selon la revendication 1, dans lequel l'étape de mise en oeuvre (S12) d'une correspondance par rapport au premier motif caractéristique de l'espace en cours et à des motifs caractéristiques prédéfinis d'une pluralité d'espaces, comprend les étapes ci-dessous consistant à :
comparer (S21), par rapport à un motif caractéristique de chaque espace de la pluralité d'espaces, le motif caractéristique de chaque espace au premier motif caractéristique ; et
déterminer (S21) que le motif caractéristique d'un espace correspond au premier motif caractéristique, si le motif caractéristique d'un espace comprend un identificateur de chacun des dispositifs sans fil dans l'espace en cours et si une qualité de signal des dispositifs sans fil dans le premier motif caractéristique est similaire à celle des dispositifs sans fil dans le motif caractéristique d'un espace.

3. Procédé selon la revendication 2, dans lequel la qualité de signal des dispositifs sans fil dans le premier motif caractéristique est considérée comme similaire à celle des dispositifs sans fil dans le motif caractéristique d'un espace si :
la qualité de signal de « N » dispositifs sans fil dans le premier motif caractéristique tombe dans une plage de qualité de signal de dispositifs sans fil correspondants dans le motif caractéristique d'un espace, et « N » atteint un nombre désigné.

4. Terminal pour un positionnement, comprenant :
un module de collecte (121) configuré de manière à collecter et analyser des messages sans fil de dispositifs sans fil dans un espace en cours en vue d'obtenir un premier motif caractéristique de l'espace en cours ;
un module de mise en correspondance (122) configuré de manière à mettre en oeuvre une correspondance par rapport au premier motif caractéristique de l'espace en cours et à des motifs caractéristiques prédéfinis d'une pluralité d'espaces ; et
un module de positionnement (123) configuré de manière à obtenir, si un second motif caractéristique correspondant au premier motif caractéristique de l'espace en cours est déterminé comme étant présent, des informations d'espace correspondant au second motif caractéristique, en vue de déterminer un résultat pour positionner l'espace en cours ;
dans lequel le motif caractéristique peut inclure une correspondance entre un identificateur et une qualité de signal d'un dispositif sans fil ;
dans lequel le dispositif comprend en outre :
un module d'apprentissage (124) configuré de manière à collecter et analyser, en ce qui concerne chaque espace de la pluralité d'espaces, des messages sans fil reçus en provenance de chaque dispositif sans fil, en vue d'obtenir une adresse MAC et un indicateur d'intensité de signal reçu, RSSI, de chaque dispositif sans fil, de manière à créer une correspondance entre l'adresse MAC et l'indicateur RSSI de chaque dispositif sans fil en vue d'obtenir le motif caractéristique de l'espace, dans lequel le module d'apprentissage (124) est configuré de manière à collecter plusieurs fois les messages sans fil reçus en provenance de chaque dispositif sans fil, et à regrouper des indicateurs RSSI, obtenus à partir des multiples collectes pour chaque dispositif sans fil, sous la forme d'une plage d'indicateurs RSSI de chaque dispositif sans fil, le terminal étant **caractérisé en ce que**, le plus grand indicateur RSSI et le plus petit indicateur RSSI obtenus pour chaque dispositif sans fil à partir des multiples collectes sont sélectionnés pour constituer la plage d'indicateurs RSSI de chaque dispositif sans fil.

5. Terminal selon la revendication 4, dans lequel le module de mise en correspondance comprend :
un sous-module de mise en correspondance (122a) configuré de manière à comparer, par rapport à un motif caractéristique de chaque espace de la pluralité d'espaces, le motif caractéristique de chaque espace, au premier motif caractéristique, et à déterminer que le motif caractéristique d'un espace correspond au premier motif caractéristique, si le motif caractéristique d'un espace comprend un identificateur de chaque dispositif sans fil dans l'espace en cours, et si une qualité de signal des dispositifs sans fil dans le premier motif caractéristique est similaire à celle des dispositifs sans fil dans le motif caractéristique d'un espace.

6. Terminal selon la revendication 5, dans lequel la qualité de signal des dispositifs sans fil dans le premier motif caractéristique est considérée comme similaire à celle des dispositifs sans fil dans le motif caractéristique d'un espace si :
la qualité de signal de « N » dispositifs sans fil dans le premier motif caractéristique tombe dans une plage de qualité de signal de dispositifs sans fil correspondants dans le motif caractéristique d'un espace, et « N » atteint un nombre désigné.

7. Programme informatique incluant des instructions qui, lorsqu'elles sont exécutées sur un processeur d'un appareil, mettent en oeuvre un procédé selon l'une quelconque des revendications 1 à 3.
